(19) **Europäisches Patentamt / European Patent Office / Office européen des brevets**

(11) **EP 2 009 557 A1**

(12) **EUROPEAN PATENT APPLICATION**

(43) Date of publication:
**31.12.2008 Bulletin 2009/01**

(51) Int Cl.:
***G06F 17/30*** *(2006.01)*

(21) Application number: **07012722.0**

(22) Date of filing: **28.06.2007**

| | |
|---|---|
| (84) Designated Contracting States:<br>**AT BE BG CH CY CZ DE DK EE ES FI FR GB GR<br>HU IE IS IT LI LT LU LV MC MT NL PL PT RO SE<br>SI SK TR**<br>Designated Extension States:<br>**AL BA HR MK RS**<br><br>(71) Applicant: **Nokia Siemens Networks Oy<br>02610 Espoo (FI)** | (72) Inventors:<br>• **Liao, Guo Qiong, Dr.**<br>  **100102 Beijing (CN)**<br>• **Zhou, Lei**<br>  **100102 Beijing (CN)**<br><br>(74) Representative: **Bruglachner, Thomas E.<br>Nokia Siemens Networks GmbH & Co. KG<br>Patentabteilung<br>Postfach 80 17 60<br>81617 München (DE)** |

(54) **Method and device for data processing and system comprising such device**

(57)    A method and a device for data processing are provided comprising the steps of (a) a transaction is processed at a first instance; (b) a log of the transaction is transmitted to at least one second instance; (c) if there is at least one second instance sending a failure message or without sending any acknowledgement, the first instance assigns an "out-of-sync" state for this second instance.

# FIG 1

**Description**

The invention relates to a method and to a device for data processing and to a system comprising such a device.

In several master-slave database replication scenarios which the prevalent operations are database reads, a master is responsible for both database reads and writes, and slaves are only responsible for database reads.

In order to ensure rapid synchronous write (i.e., after a commit of a transaction all databases must have the same images of the updated data) among all servers, a good synchronization solution is required.

A basic solution to ensure synchronous write is a "2-Phase Commit" (2PC) protocol.

According to [1], in computer networking and databases, the two-phase commit protocol is a distributed algorithm that lets all nodes in a distributed system agree to commit a transaction. The protocol results in either all nodes committing the transaction or aborting, even in the case of network failures or node failures. The two phases of the algorithm are the commit-request phase, in which the coordinator attempts to prepare all the cohorts, and the commit phase, in which the coordinator completes the transactions at all cohorts.

However, this approach has the following disadvantages:

- The 2PC protocol requires two rounds of message exchange together with several additional logging operations. This leads to a significant delay regarding an execution of the transactions.
- In a general 2PC, an AND-based model is used for committing a successful operation. Hence, only if all sites vote "commit", an overall transaction commits. Such an approach is considered too strict for replication transactions since it requires all database replicas to be successfully updated.
- If the master database fails, further transaction will be blocked.

In addition, a 3-Phase Commit Write Protocol (see, e.g., [2]) is known that is used for synchronous write operations utilizing a majority-based commit model. Hence, upon receipt of a majority of commit acknowledgements, the master sends a commit response to the slaves. The Majority-based decision making algorithm ensures that a transaction is not delayed or blocked in case that, e.g., only one of the group members fails to provide its transaction acknowledgement in a timely manner.

However, this method still needs two rounds of message exchange and several additional logging operations. Moreover, an overhead for database reads increases since a database read needs to be sent to all slaves by a Read-Majority based protocol.

The **problem** to be solved is to overcome the disadvantages as stated before and in particular to provide an efficient approach to replicate master-slave databases.

This problem is solved according to the features of the independent claims. Further embodiments result from the depending claims.

In order to overcome this problem, a method is provided for data processing comprising the steps:

(a) a transaction is processed at a first instance;
(b) a log of the transaction is transmitted to at least one second instance;
(c) if there is at least one second instance sending a failure message or without sending any acknowledgement, the first instance assigns an "out-of-sync" state for this second instance.

In particular, after step (b) and prior to step (c), the first instance may indicate a success, e.g., to a third instance requesting the transaction to be processed.

Furthermore, the first instance may indicate such success in case the first instance receives an acknowledgment, e.g., a "YES"-response or a "NO"-response from each second instance or in case the first instance recognizes a time-out, e.g., no response from at least one second instance.

If at least one second instance sends a failure message, e.g. a "NO"-response (or "NO"-acknowledgment) or if the at least one second instance does not provide any response at all (e.g., in case a time-out occurs), the first instance assigns the "out-of-sync" state for and/or to this (particular) second instance. It is to be noted that the "out-of-sync" state indicates that this particular second instance (or several such second instances) is no longer considered synchronized, i.e. maintaining a current status of data in its database.

The "out-of-sync" state may be maintained at the first instance and/or at the (at least one) second instance and/or at a further (e.g., third) instance and/or at a central database comprising status information of the instances.

Hence, as long as the first instance can commit the transaction successfully, a success of the overall processing can be indicated by the first instance, e.g., to an outer requesting third instance.

In an embodiment, the first instance comprises a master database. Furthermore, the at least one second instance may each comprise a slave database.

In another embodiment, the first instance indicates a success or a failure by sending or forwarding a respective message to a third instance. The third instance may be an application in particular of a different software layer. The third instance may forward a request to the first instance prior to step (a). Such request can in particular be related or initiate a replication of databases.

In a further embodiment, the first instance and/or the at least one second instance and/or the third instance is/are at least one of the following types:

- a process or thread;
- a database;
- a database system;
- a node;
- a component within a network;
- an instance of a distributed system.

According to a next embodiment, the first instances waits after step (b) for a response from the at least one second instance or for a time-out.

If no response can be received, e.g., due to a failure regarding the connection between the first instance and a second instance, the first instance may wait for a pre-determined period of time. After that time is lapsed either a broken connection or an inactive particular second instance is assumed.

It is also an embodiment that upon receipt of the log of the transaction, the at least one second instance performs the steps:

(b1) the at least one second instance flushes its transaction logs;
(b2) the at least one second instance tries to commit the transaction;
(b3) if step (b2) is successfully executed, the at least one second instance transmits a confirmation to the first instance;
(b4) otherwise, the at least one second instance transmits a failure to the first instance.

It is to be noted that the confirmation according to step (b3) may comprise a success confirmation, in particular a "YES"-message. The failure according to step (b4) may in particular comprise a failed confirmation, e.g., a "NO"-message.

Pursuant to another embodiment, each at least one second instance performs steps (b1) to (b4).

Hence, if one of the second instances cannot execute the transaction as required according to the transactions-log, it may enter an out-of-sync state indicating that the data associated with this second instance may not be up-to-date. Hence, a request from a third instance to this second instance could be rejected until the second instance re-synchronizes and re-enters the according sync-state.

According to another embodiment the first instances assigns an out-of-sync state for a second instance that does not provide an acknowledgment within a given period of time and/or that indicates to the first instance that a transaction cannot be successfully executed.

The problem state supra is also solved by a device for data processing comprising a processor unit that is arranged and/or equipped such that the method as described herein is executable on said processor unit.

According to an embodiment, the device is a communication device, in particular comprising one of the following types:

- a process or thread;
- a database;
- a database system;
- a node;
- a component within a network;
- an instance of a distributed system.

The device may in particular be a node within a distributed system, in particular within a network. Such node may comprise a storage that may be utilized as database.

The problem state supra is also solved by a system, in particular by a communication system, comprising the device as described herein.

Embodiments of the invention are shown and illustrated in the following figures:

Fig.1    shows a message diagram between a master and a slave utilizing a one-phase commit protocol based on transaction logs;

Fig.2    visualizes a response time of a two-phase commit protocol utilizing a message diagram between a master and a slave;

Fig.3    visualizes a response time of a one-phase commit protocol utilizing a message diagram between a master and a slave.

This approach provides in particular a One-Phase Commit protocol combined with an OR-based commit model for synchronous write operation.

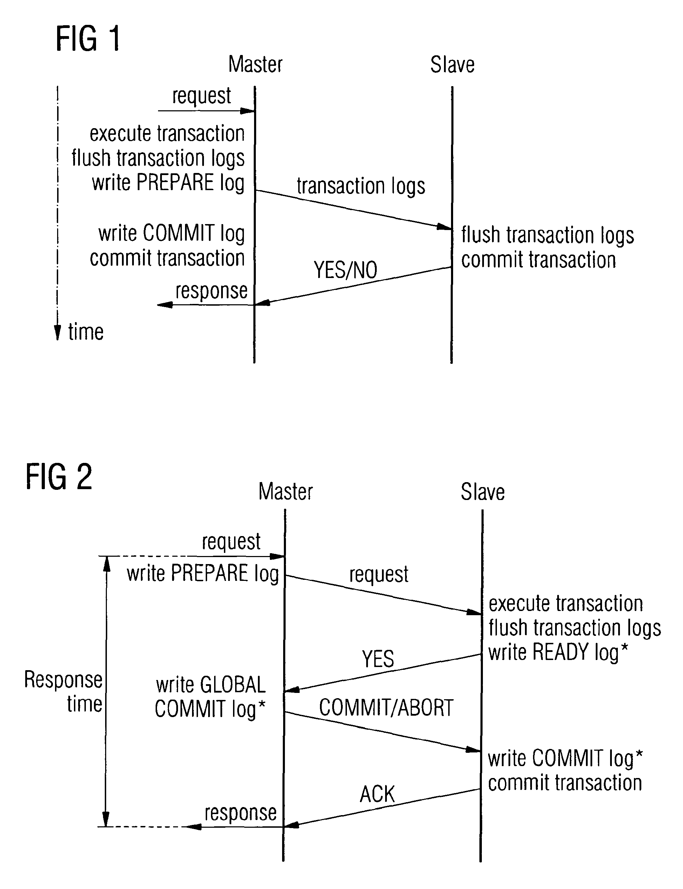

**Fig.1** shows a message diagram between a first instance (also referred to as "master") and at least one second instance (also referred to as "slave"). Exemplary, only one second instance is depicted in Fig.1, although there may be several second instances (slave databases) present in the scenario described.

For replication purposes it is important that the first instance, e.g. a master node or a master database, ensures that after an executed transaction all databases at each instance have the same content.

Transaction logs are used for data synchronization purposes. Hence, a third instance, e.g., an application, sends a request to the master. The master executes a transaction, flushes its transaction logs and writes a PREPARE log. Then, the transaction logs are sent to the slave, e.g., to the at least one second instance (in particular transaction logs may be sent to all slaves, in particular to all slave databases or all processes or threads responsible for the slave databases) for synchronization purposes.

Such a process may be summarizes as follows:

Step 1:    After writing a PREPARE log, the master may send transaction logs to all slaves.

Step 2:    After committing the transaction, the slave sends a "YES" (if such execution of the transaction was successful) or "NO" (if the transaction could not be successfully executed) acknowledgement to the master.

Step 3:    After receiving acknowledgement responses from the slaves or after a time-out (e.g., a pre-determined period of time for the master to wait for a response), the master will return a successful response to third instance, in particular the application that initiated the request.

In addition to the above, an OR-based commit model may be applied for efficiency purposes. Hence, as long as the master database can successfully commit a transaction, the overall commit is considered a success.

According to Fig.1, if the master fails to execute the transaction, it will return a failure-response to the application; otherwise the master can commit the transaction without the necessity to obtain acknowledgements from all slaves.

However, a problem of such OR-based commit model may be based on the fact that data at slave databases sending a "NO"-message back to the master is no longer synchronized and hence should not be accessed by the application.

In order to solve this problem, a mechanism of state notification can be used. That is, when the master receives such "NO"-messages or when the master detects (e.g., due to a time-out) that a connection to a slave is lost, the master may notify all applications about an "out-of-sync"-state of this particular slave. Subsequently, the applications will not send any read request to this "out-of-sync"-slave until its state returns "sync".

Alternatively or in addition, if a slave fails to commit a transaction or if it loses connection with the master, it can identify itself as "out-of-sync" state until it successfully completes resynchronization with the master.

If the slave in the "out-of-sync" state receives a read request from an application, the slave can reject such request or - in case there is a valid connection with the master - forward such request to the master.

An advantage of the approach presented herein is that a response time to a third instance, e.g., an application initiating a request directed to the master, can be reduced in particular if an average transaction log size is not larger than a block size of the operating system.

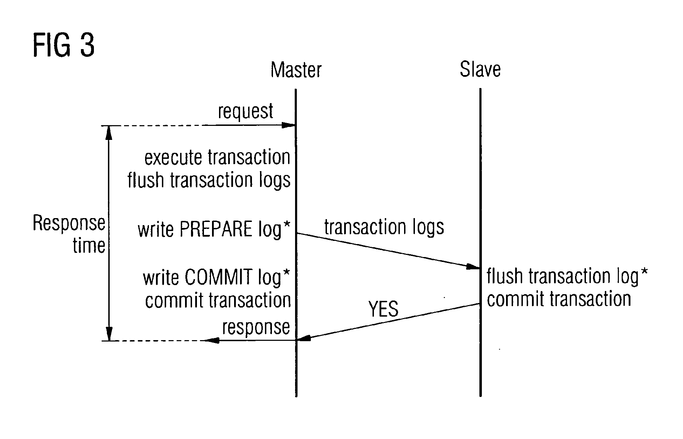

A response time of a two-phase commit system is shown in Fig.2 and a response time of the one-phase commit system according to this approach is shown in Fig.3.

The following abbreviations are used:

$RT_{2PC}$        response time using two-phase commit protocol (2PC);
$RT_{1PC}$        response time using one-phase commit protocol (1PC);
$t_{execution}$        time to execute a transaction;
$t_{flush-log}$        time to flush logs;
$t_{write-log}$        time to write a log;
$t_{message}$        time to transfer a message;
$t_{commit}$        time to commit a transaction;

$t_{transaction\text{-}log}$     time to transfer transaction logs;
$t_{I/O}$             time of a disk I/O operation.

The response times $RT_{2PC}$ and $RT_{1PC}$ can be roughly computed according to:

$$RT_{2PC} = t_{execution} + t_{flush\text{-}log} + t_{commit} + {} + 4t_{write\text{-}log} + 4t_{message} \tag{1}$$

$$RT_{1PC} = t_{execution} + 2t_{flush\text{-}log} + t_{commit} + {} + t_{write\text{-}log} + t_{message} + t_{transaction\text{-}log} \tag{2}$$

$$RT_{2PC} - RT_{1PC} = (3t_{write\text{-}log} + 3t_{message}) - {} - (t_{flush\text{-}log} + t_{transaction\text{-}log}) \tag{3}$$

If it is assumed that

$$t_{transaction\text{-}log} = 3t_{message} \tag{4}$$

and the size of transaction logs is not larger than the block size of operating system, then the difference between the approaches may result to:

$$RT_{2PC} - RT_{1PC} = 2t_{I/O} \tag{5}$$

Another advantage is that the blocking in the two-phase commit system can be eliminated. As long as a slave receives the transaction logs, it can immediately commit the transaction locally.
It is also an advantage that the availability of systems improves since the master can commit a transaction by the OR-based commit model.

**References:**

[1] Wikipedia: "Two-phase commit protocol", http://en.wikipedia.org/wiki/2PC

[2] Wikipedia: "Three-phase commit protocol", http://en.wikipedia.org/wiki/Three-phase_commit_protocol

**Claims**

**1.** A method for data processing comprising the following steps:

    (a) a transaction is processed at a first instance;
    (b) a log of the transaction is transmitted to at least one second instance;
    (c) if there is at least one second instance sending a failure message or without sending any acknowledgement, the first instance assigns an "out-of-sync" state for this second instance.

2. The method according to claim 1, wherein the first instance comprises a master database.

3. The method according to any of the preceding claims, wherein the at least one second instance comprises each a slave database.

4. The method according to any of the preceding claims, wherein the first instance indicates a success or a failure by sending or forwarding a respective message to a third instance.

5. The method according to claim 4, wherein the third instance is an application in particular of a different software layer.

6. The method according to any of claims 4 or 5, wherein the third instance forwards a request to the first instance prior to step (a).

7. The method according to any of the preceding claims, wherein after step (b) the first instance waits for a response from the at least one second instance or for a time-out.

8. The method according to any of the preceding claims, wherein upon receipt of the log of the transaction, the at least one second instance performs the steps:

(b1) the at least one second instance flushes its transaction logs;
(b2) the at least one second instance tries to commit the transaction;
(b3) if step (b2) is successfully executed, the at least one second instance transmits a confirmation to the first instance;
(b4) otherwise, the at least one second instance transmits a failure to the first instance.

9. The method according to any claim 8, wherein each at least one second instance performs steps (b1) to (b4).

10. The method according to any of the preceding claims, wherein the first instance and/or the at least one second instance and/or the third instance is/are at least one of the following types:

- a process or thread;
- a database;
- a database system;
- a node;
- a component within a network;
- an instance of a distributed system.

11. The method according to any of the preceding claims, wherein the first instances assigns an out-of-sync state for a second instance that does not provide an acknowledgment within a given period of time and/or that indicates to the first instance that a transaction cannot be successfully executed.

12. A device for data processing comprising a processor unit that is arranged such that the method according of any of the preceding claims is executable on said processor unit.

13. The device according to claim 12, wherein said device is a communication device, in particular of the following types:

- a process or thread;
- a database;
- a database system;
- a node;
- a component within a network;
- an instance of a distributed system.

14. A system, in particular a communication system, comprising the device according to any of claims 12 to 13.

## FIG 1

Master                    Slave

request

execute transaction
flush transaction logs
write PREPARE log          transaction logs

write COMMIT log                                flush transaction logs
commit transaction        YES/NO                commit transaction
response

time

## FIG 2

Master                    Slave

request
write PREPARE log          request

                                                execute transaction
                                                flush transaction logs
                           YES                  write READY log*
Response    write GLOBAL
time        COMMIT log*     COMMIT/ABORT

                                                write COMMIT log*
                                                commit transaction
                           ACK
response

# FIG 3

EP 2 009 557 A1

**European Patent Office**

## EUROPEAN SEARCH REPORT

Application Number

EP 07 01 2722

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 039 661 B1 (RANADE DILIP M [IN]) 2 May 2006 (2006-05-02) * abstract * * column 2, line 63 - column 3, line 13 * * column 5, line 50 - column 8, line 28 * * column 10, line 60 - column 11, line 22 * | 1-14 | INV. G06F17/30 |
| X | EP 0 950 955 A (LUCENT TECHNOLOGIES INC [US]) 20 October 1999 (1999-10-20) * abstract * * column 3, line 1 - column 4, line 29 * | 1-14 | |
| X | US 6 052 797 A (OFEK YUVAL [US] ET AL) 18 April 2000 (2000-04-18) * abstract * * column 3, line 1 - column 4, line 29 * | 1-14 | |
| X | US 6 289 357 B1 (PARKER CHRISTOPHER F [US]) 11 September 2001 (2001-09-11) * the whole document * | 1-14 | TECHNICAL FIELDS SEARCHED (IPC) G06F |

The present search report has been drawn up for all claims

| Place of search | Date of completion of the search | Examiner |
|---|---|---|
| Berlin | 10 December 2007 | Siódmok, Wojciech |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 07 01 2722

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2007

| Patent document cited in search report | | Publication date | Patent family member(s) | | Publication date |
|---|---|---|---|---|---|
| US 7039661 | B1 | 02-05-2006 | NONE | | |
| EP 0950955 | A | 20-10-1999 | CA | 2265158 A1 | 07-10-1999 |
| | | | DE | 69923621 D1 | 17-03-2005 |
| | | | DE | 69923621 T2 | 06-04-2006 |
| | | | JP | 3822381 B2 | 20-09-2006 |
| | | | JP | 11327982 A | 30-11-1999 |
| | | | US | 6202067 B1 | 13-03-2001 |
| US 6052797 | A | 18-04-2000 | NONE | | |
| US 6289357 | B1 | 11-09-2001 | NONE | | |

EPO FORM P0459

For more details about this annex : see Official Journal of the European Patent Office, No. 12/82